(19) Europäisches Patentamt
European Patent Office
Office européen des brevets

(11) **EP 3 415 568 A1**

(12) **DEMANDE DE BREVET EUROPEEN**

(43) Date de publication:
**19.12.2018 Bulletin 2018/51**

(51) Int Cl.:
***C08L 97/00*** *(2006.01)*

(21) Numéro de dépôt: **17000996.3**

(22) Date de dépôt: **13.06.2017**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(71) Demandeur: **Société Polymer Industry
59100 Roubaix (FR)**

(72) Inventeur: **Kamel, Kamoun
59100 Roubaix (FR)**

(54) **FABRICATION D'UNE GAMME DE COMPOSITE THERMOPLASTIQUE ET THERMODURCISSABLE À USAGE INDUSTRIEL : MATRICE POLYMÉRE DE PLASTIQUE ET CHARGE FARINE DE NOYAUX D'OLIVE**

(57)  Le projet s'inscrit dans une stratégie d'innovation de fabrication d'une nouvelle gamme de composites thermoplastique et thermodurcissable à usage industriel, le matrice : Tout polymère de plastique et un charge bio-sourcé farine de noyau d'olive comme charge organique renforçant jusqu'un taux de 60% en poids et plus un agent de couplage jusqu'un taux de pourcentage de 5% sans altération notable aux propriété mécanique du matériaux.

**Figure1.** *Particules de charge grignon d'olive observées au MEB*

EP 3 415 568 A1

## Description

La présente invention s'inscrit dans une stratégie de la valorisation d'un sous produit agro-industriel issu de la trituration des olives en vue de son utilisation comme charge renforçant dans un mélange polymère

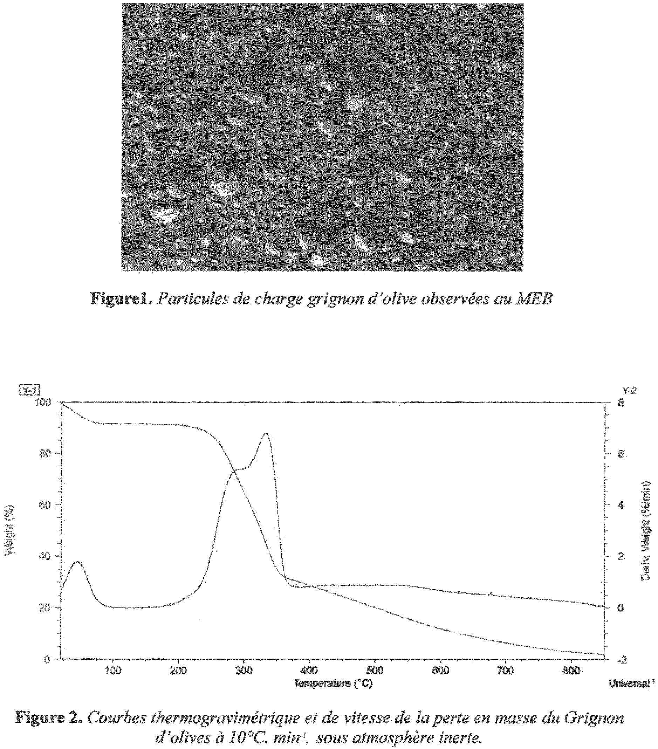

L'étude de la morphologie de la charge GO a été réalisée au microscope électronique à balayage afin d'examiner la forme et la dimension des particules de grignon d'olives (GO). La distribution en taille a été déterminée à l'aide du logiciel Image J. L'observation à un grossissement de 40X (figure 1) a révélé des particules compactes individualisées présentant une large distribution en taille, établie dans l'intervalle 50 à 200$\mu$m. La forme des particules n'est pas uniforme et semble contenir principalement deux populations ; la première est formée de nodules plutôt sphériques avec une faible granulométrie (inférieure à 50 $\mu$m), alors que la seconde est constituée de particules ovoïdes plus ou moins allongées, ayant un rapport L/D entre 4 et 10.

La composition chimique du GO est portée dans le tableau 1. Elle confirme le caractère lignocellulosique de la charge puisqu'elle est constituée principalement de lignine, hémicelluloses et cellulose avec une teneur respectivement égale à 37.7, 22.5 et 25% en poids. Ces résultats sont en parfait accord avec ceux d'autres auteurs (Demirbas. 2004. Jauhiainen *et al.,* 2005. Garcia-Ibanez et *al.,* 2006).

**Le Tableau suivant** : Composition chimique de la charge Grignon d'Olives.

| Composants | Teneur (%) |
|---|---|
| Graisses et cires | 6.8 |
| Pectine | 6.6 |
| Lignine | 37.7 |
| Hemicelluloses | 22.5 |
| Cellulose | 25 |
| Cendre | 1.37 |

La mise en oeuvre des composites nécessite la mixtion de la charge avec la matrice à des températures élevées, supérieures au point de fusion du polymère. Comme une exposition assez prolongée de la charge GO, dans le milieu fondu, peut éventuellement détériorer le caractère lignocellulosioque de la charge, il serait précautionneux de suivre la dégradation du matériau GO en fonction de la température. La courbe thermogravimétrique ainsi que celle de vitesse de la perte en masse du grignon d'olives à 10°C/min, sont représentées sur la figure 2. L'analyse des résultats obtenus, divulgue les divers phénomènes qui ont eu lieu dans le matériau, pendant la montée en température ; ainsi :

- aux températures < 200°C, on assiste à la phase de séchage du grignon d'olives au cours de laquelle l'humidité résiduelle est évacuée.
- entre 200 et 400°C, on différencie la perte en masse la plus importante du GO. Dans cet intervalle, deux processus de décompositions apparaissent distinctement, avec des vitesses maximales de perte en masse qui se manifestant respectivement à 288°C et à 333°C. La première évolution correspond à la dégradation de l'hémicellulose alors que la seconde transformation est associée à la décomposition thermique de la cellulose. [Blanco Lopéz *et al.,* 2002]. Des résultats similaires ont été observés par Orfao et *al.*(1999), qui ont étudié le comportement thermique de différents composants de la biomasse (cellulose, hémicellulose et lignine) sous atmosphère inerte avec une rampe de 5°C/min. Ils ont trouvé que la dégradation de la cellulose commence à 225°C et atteint un maximum à 332°C. Par contre l'hémicellulose se décompose à des températures plus faibles, vers 160°C, alors que la vitesse maximale de perte en masse de ce composé a été localisée à 281°C [Orfao et *al.,* 19991.
- pour des températures supérieures à 400°C, une perte de masse lente qui se prolonge jusqu'à 720°C, est observée. Ce comportement correspond au lent processus de décomposition de la lignine qui démarre à la même température que l'hémicellulose. Par contre, Orfao *et al.,* (1999), ont montré que la lignine se dégrade à partir de 110°C.

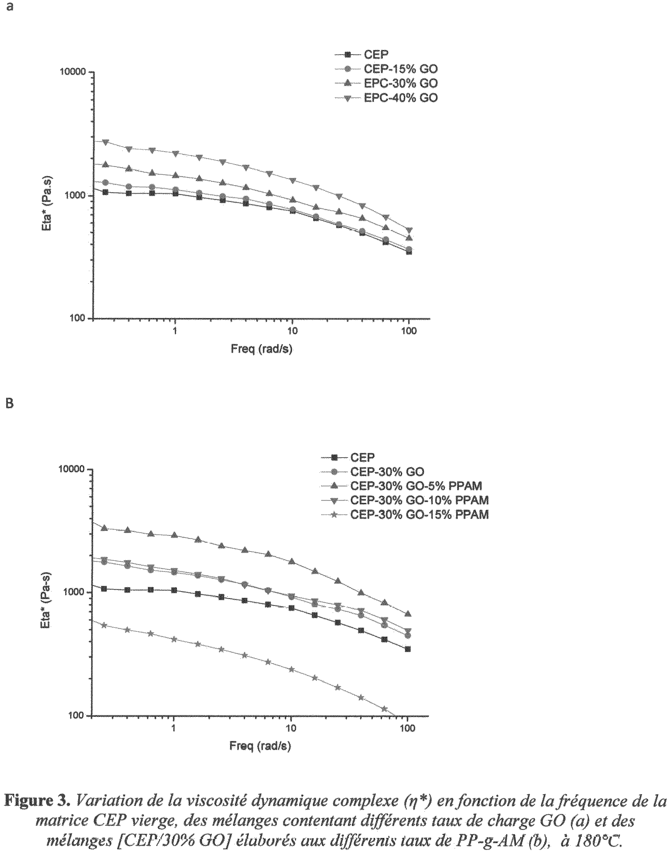

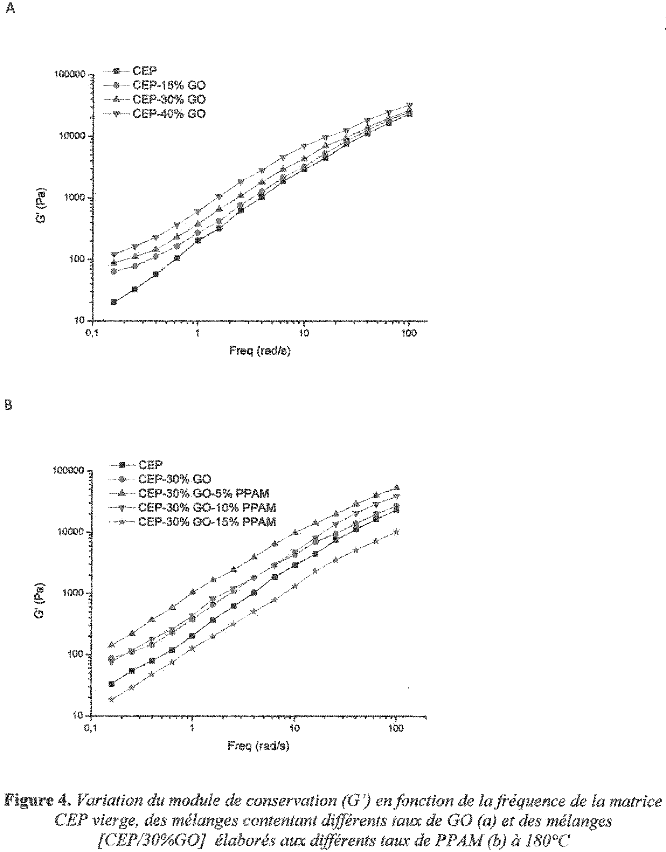

Le comportement viscoélastique à l'état fondu du composant matrice vierge (CEP) ainsi que des mélanges CEP/GO, compatibilisés ou non avec le copolymère PP-g-AM et élaborés aux différentes compositions, a été étudié dans le domaine viscoélastique linéaire. Afin d'apprécier aussi bien l'effet de la présence de la charge (GO) que de l'ajout du copolymère compatibilisant (PP-g-AM) sur les propriétés viscoélastiques à l'état fondu de ces systèmes, la viscosité dynamique complexe ($\eta^*$) et le module de conservation (G') sont présentés en fonction de la fréquence à la température de 180°C pour les compositions réalisées. Ainsi, les figures 3.a et 3.b représentent la variation de la viscosité dynamique complexe ($\eta^*$) en fonction de la fréquence, respectivement pour les mélanges simples CEP/GO, élaborés aux différents taux (0, 15, 30 et 40% en poids) de charge (GO) et pour leurs homologues compatibilisées, élaborés avec 30% en poids de GO, par adjonction d'agent de couplage (PP-g-AM) aux différents taux (0, 5, 10 et 15% en poids). Les figures 4.a et 4.b montrent la variation du module de conservation en fonction de la fréquence pour les deux types de mélanges.

Les courbes obtenues sur la figure 3 présentent un comportement à l'écoulement similaire ; ainsi, la viscosité diminue avec la fréquence pour les diverses formulations étudiées ; ceci est une indication sur le comportement qui est du type rhéofluidifiant ou pseudoplastique.

On remarque sur la figure 3.a, que sur tout le domaine de fréquence étudié, la viscosité dynamique complexe ($\eta^*$) augmente avec le taux massique de la charge GO contenue dans le mélange. Cette augmentation parait non significative pour un taux de charge dans le milieu équivalent à 15% en poids, notamment aux fréquences élevées. Compte tenu du caractère hydrophile de la charge GO, la faible densité des forces interactives localisées à la surface des particules dispersées avec la matrice CEP (apolaire) favoriserait l'agglomération de celles-ci ; ainsi, les interactions particules-particules deviennent prédominantes. A cisaillement élevé, les forces physiques faiblement énergétiques entre particules seraient détruites et la dispersion de la charge dans le milieu serait améliorée notamment dans le mélange renfermant un faible taux de charge (15% en poids de GO). Pour les mélanges élaborés à des taux plus importants de GO (30 et 40% en poids), aux domaines de cisaillements élevés les interactions particules-particules ne seraient que partiellement rompues. De ce fait, l'agglomération des particules reste maintenue et va induire dans ces conditions une augmentation de la viscosité du mélange.

L'accroissement observé de la viscosité avec la teneur de GO dans le mélange est dû à l'augmentation rapide de collisions entre les particules puisqu'elles deviennent plus serrées les unes aux autres [Metzner. 1985].

L'augmentation de la viscosité est plus importante aux basses fréquences où la charge et les chaînes de polymère ne sont pas complètement orientées. Ainsi, la présence des particules GO dans le système perturbe l'écoulement normal du polymère et empêche la mobilité des segments de chaînes en mouvement. En effet, les interactions entre particules solides et polymère fondu, même si leur intensité est faible, entraînent une augmentation de résistance à l'écoulement des mélanges CEP/GO, dans ce domaine, par rapport au polymère matrice vierge. Avec l'accroissement du taux de charge dans le milieu, le phénomène s'amplifie et la viscosité augmente davantage.

La figure 3.b représente les variations de la viscosité dynamique complexe en fonction de la fréquence des mélanges (CEP/GO) élaborés avec 30% de charge et aux différentes teneurs de copolymère PP-g-AM (0, 5, 10 et 15% en poids).

On remarque que la viscosité du mélange à 30% en poids de GO et exempt de PP-g-AM, présente sur toute la gamme de fréquences, des valeurs plus importantes que celles de la matrice CEP vierge. De ce fait, la présence de la charge GO à ce pourcentage provoque une certaine résistance à l'écoulement du matériau à l'état fondu.

Concernant l'effet du taux du PP-g-AM, il est à noter que l'ajout de ce tiers corps au mélange (CEP/GO) génère deux effets : le premier correspond à un renforcement des interactions entre la charge et la matrice alors que le second consiste à plastifier la matrice polymère. Ainsi, une compétition entre ces deux effets est susceptible de s'instaurer dans le système. Ces phénomènes ont été évoqués par Han *et al.* 1981 suite aux résultats obtenus pour des polyoléfines chargées carbonate de calcium avec du silane comme agent compatibilisant. L'incorporation du copolymère intermédiaire PP-g-AM à un taux de 5% en poids au mélange CEP chargé 30% GO (figure 3a), entraine une augmentation substantielle de la viscosité du système à l'état fondu par rapport à son homologue non compatibilisé. De la sorte, le PP-g-AM parfaitement miscible dans la matrice CEP diffuse à travers cette phase pour venir se localiser à la surface des particules de charge GO. Dans ces conditions, les fonctions anhydrides succiniques greffées aux chaînes PP du copolymère sont susceptibles de réagir avec les groupements hydroxyles des fibres lignocellulosiques des particules, générant ainsi des liaisons covalentes charge/copolymère à travers l'établissement des fonctions esters. Une interface cohérente et bien adhésive va se constituer au cours du cycle thermomécanique de mise en oeuvre du composite CEP/GO compatibilisé au PP-g-AM. Dans ce cas, l'effet renforçant les interactions du copolymère intermédiaire (PP-g-AM) est prédominant par rapport à l'effet plastifiant.

Lorsque la concentration du tiers corps PP-g-AM augmente et devient égale à 10% en poids, un antagonisme semble s'aménager dans le milieu et les deux effets (renforçant/plastifiant) se compensent (figure 3.b). Ainsi, les courbes de variation de $\eta^*$ des deux mélanges chargé 30% en poids de GO, avec et sans l'addition PP-g-AM à raison de 10% en poids paraissent, aux erreurs de mesures près, quasiment confondues sur tout le domaine de fréquence étudié.

Pour un taux de PP-g-AM plus élevé, équivalent à 15% en poids, la viscosité dynamique complexe $\eta^*$ diminue d'environ 75% par rapport au mélange analogue élaboré sans ajout de copolymère PP-g-AM. En conséquence, une fois que la saturation du copolymère PP-g-AM à la périphérie des particules de la charge GO est atteinte, l'excès du PP-g-AM va se solubiliser dans le composant matrice CEP du mélange. Ainsi, en s'intercalant entre les chaines de la phase CEP, le copolymère PP-g-AM va jouer le rôle d'un plastifiant, eu égard à sa faible masse molaire. Ce dernier, facilite le glissement des chaines du polymère matrice et favorise un écoulement plus aisé du matériau à l'état fondu. De ce fait, l'excédent du copolymère dans la matrice provoque un désenchevêtrement des chaines constitutives et entraine une réduction de la viscosité.

La figure 4.a représente la variation du module de conservation G' des mélanges élaborés aux différents taux de charge (15, 30 et 40% en poids) et du composant matrice seul CEP, en fonction de la fréquence à 180°C.

On peut remarquer que le module de conservation est d'autant plus important que le taux de charge dans le mélange augmente. Cassagnau *et al.* 2008 ont attribué les changements de G' aux basses fréquences à un comportement solide qui est dû à la structuration de la charge dans la matrice polymère. En outre, l'augmentation du module élastique est notable pour le composite contenant 40% en poids de GO, ce qui pourrait être associé au développement des interactions charge-charge. Des résultats similaires ont été trouvés par Wang *et al.* 1999 qui ont démontré que l'incorporation d'un taux élevé de carbonate de calcium dans une matrice polypropylène induit des interactions charge-charge importantes, ce qui entraîne une augmentation considérable du module de conservation (G').

A partir de la figure 4b, on peut noter que l'ajout de 5% en poids de PP-g-AM au mélange CEP/30% GO entraîne un accroissement du module de conservation par rapport au mélange élaboré sans incorporation d'agent compatibilisant. Ceci indique que le PP-g-AM a favorisé les interactions charge-matrice. En effet, la réaction d'estérification conduit à la formation d'un réseau de fibres insérées au copolymère PP-g-AM, à l'interface matrice/charge, susceptible d'améliorer les propriétés élastiques du composite. Cependant, lorsque la teneur en PP-g-AM dans le mélange CEP/30%GO augmente et devient équivalente à 10% ou 15% en poids, une diminution significative du module élastique est observée. Zhou *et al.* 2013 ont démontré qu'un excès de PP-g-AM dans les composites à matrice PP chargée en poudre de Bamboo, engendre la formation d'une couche mince et irrégulière de polymère qui conduit à la diminution de l'uniformité et l'adhésion entre la charge et la matrice ; cet effet serait à l'origine de la diminution du module de conservation. Aussi, la réduction de l'élasticité en milieu fondu pourrait être attribuée à la destruction des entrelacements des chaînes constitutives de la matrice, conséquente à un excès de PP-g-AM, pour que l'effet plastifiant devienne prédominant.

Afin d'étudier l'effet de l'ajout du grignon d'olive et du PP-g-AM sur les propriétés thermiques du poly(éthylène/propylène) [CEP], nous avons réalisé une série d'analyses calorimétriques différentielles dont le protocole a été décrit dans le chapitre (2).

Dans le tableau 2, nous avons porté les résultats obtenus par DSC, en termes de températures de fusion ($T_f$) et de cristallisation ($T_c$), d'enthalpies de fusion brute ($\Delta H_f$) et corrigée ($\Delta H_{fc}$) ainsi que du taux de cristallinité ($\chi_c$).

**Le Tableau suivant** : Caractéristiques thermiques des mélanges CEP/GO/PP-g-AM élaborés aux différentes compositions.

| Mélange | $T_c$ | $T_f$ | $\Delta H_f$ | $\Delta H_{fc}$ | $\chi_c$ |
|---|---|---|---|---|---|
| CEP/GO/PPAM | °C | °C | J.g$^{-1}$ composite | J.g$^{-1}$ CEP | % |
| wt% | | | | | |
| 100/0/0 | 120 | 165.6 | 78.4 | 78.4 | 36.4 |
| 85/15/0 | 122 | 168 | 72.7 | 85.6 | 39.8 |
| 70/30/0 | 123 | 167 | 61.2 | 87.5 | 40.6 |
| 60/40/0 | 124 | 167.2 | 50.6 | 84.3 | 39.1 |
| 65/30/5 | 123 | 168 | 63.9 | 91.3 | 42.4 |
| 60/30/10 | 123 | 169 | 65.1 | 93 | 43.2 |
| 55/30/15 | 123 | 171 | 60.4 | 86.4 | 40.1 |

Un seul pic exothermique a été enregistré pour tous les mélanges. Pour le polymère CEP extrudé seul, sans ajout de charge GO, le pic de cristallisation a été observé à $T_c$=120°C alors que pour les mélanges simples CEP/GO, la valeur de $T_c$ correspondante augmente légèrement avec le taux de charge contenu dans le mélange. Ceci suggère que la présence des particules de charge dispersées, favorise un amorçage un peu prématuré de la cristallisation du CEP, d'autant plus perceptible que le taux de charge est important. Ainsi, l'augmentation de la surface spécifique de la charge amplifie substantiellement l'effet nucléant des particules GO. En effet, celles-ci se comportent comme des défauts de structure et constituent des centres de germination et de nucléation préférentiels des cristallites, pour les chaînes CEP de la matrice. Ces résultats sont en accord avec ceux trouvés par Rosa *et al.* 2009 qui ont montré que l'ajout de la cosse de riz, à une matrice polypropylène, influe considérablement le processus de cristallisation des chaines PP, en l'initiant précocement.

Lors de la deuxième montée en température, un seul pic endothermique a été observé pour toutes les compositions. La température de fusion est légèrement plus élevée pour les composites par rapport à la matrice CEP vierge, et ne semble pas être affectée par le taux de charge dans les mélanges. L'aire du pic de fusion ($\Delta H_f$) diminue avec le taux du GO contenu dans le matériau, du moment que la concentration en polymère CEP dans les mélanges s'amoindrit. Cependant, après avoir normalisé l'enthalpie de fusion en la rapportant à la fraction massique de CEP effectivement présent dans le mélange ($\Delta H_{fc}$), il nous a été possible de vérifier que celle-ci montre une augmentation significative pour les mélanges chargés. En effet, elle passe de 78.4 J/g pour le CEP non chargé à 85.6 J/g pour le mélange (CEP/15% GO). Pour les autres mélanges où le pourcentage massique de GO est respectivement de 30% et 40%, l'enthalpie reste toujours supérieure à celle du CEP.

Le taux de cristallinité a été calculé à partir l'équation suivante :

$$\chi_c(\%) = 100 * \frac{\Delta H_f}{f * \Delta H_f^{\infty}}$$

où "$\Delta H_f$" est l'enthalpie de fusion mesurée pour le CEP seul et les mélanges CEP/GO, $\Delta H_f^{\infty}$ est l'enthalpie de fusion pour un polymère 100% cristallin (209J/g pour le PP syndiotactique et 273J/g pour le PE) et $f$ est la fraction du copolymère CEP dans le mélange. Dans notre cas, le matériau n'est pas un PP syndiotactique, c'est un copolymère ; donc le calcul du taux de cristallinité doit tenir compte du pourcentage de PP et de PE contenu dans le copolymère. Le taux de cristallinité est alors calculé comme suit :

$$\chi_c = 100 * \frac{\Delta H_f}{f * (273 * 0.1 + 209 * 0.9)}$$

Les valeurs du taux de cristallinité pour les différents mélanges sont portées dans le tableau 2. Pour les composites non compatibilisés, on constate une augmentation du taux de cristallinité conséquente à la présence de particules GO dans le système. En effet, ce taux passe de 36.4% pour le CEP non chargé à 40.6% pour le mélange CEP/30% GO. L'augmentation du taux de cristallinité avec l'ajout du GO dans les mélanges vient confirmer le fait que cette charge favorise la cristallisation de la matrice polymère probablement suite à la création de nuclénats à la surface de la charge, entrainant ainsi la formation d'une couche transcristalline (Na *et al.* 2006).

Cet effet nucléant est accentué en présence d'une faible quantité de compatibilisant. Ceci est probablement dû au développement de fortes interactions entre les particules de GO et la matrice polymère en présence du PP-g-AM. En d'autres termes, l'adhésion entre les particules de GO et la matrice polyoléfine se trouve fortement améliorée en présence du PP-g-AM. En conséquence, la charge lignocellulosique a un effet plus marquant sur la cristallisation de la matrice avec l'ajout du copolymère compatibilisant. La température de fusion de la matrice CEP augmente de façon incessante avec la teneur en PP-g-AM contenu dans le composite ; ce qui correspond à des domaines cristallins plus étendus. Par contre, le taux de cristallinité augmente considérablement en présence de 5% et de 10% de PP-g-AM, puis diminue lorsque la teneur en PP-g-AM atteint 15% en masse. Cette dernière observation est probablement due à une perte de la régularité des chaînes induisant une perte de cristallinité ; des résultats semblables ont été rapportés par Mutjé *et al.* 2007.

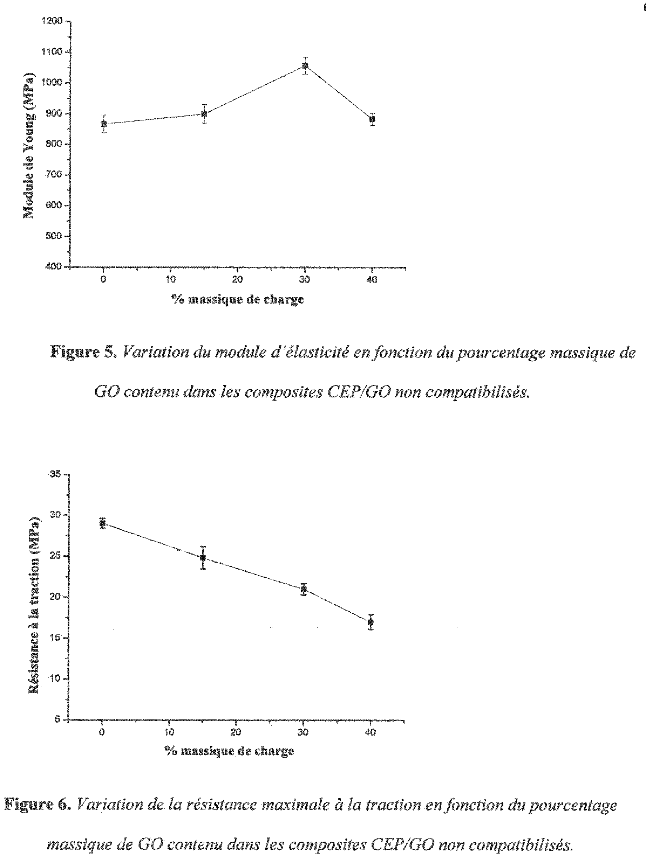

Dans le but d'étudier l'influence du taux de GO, sur les propriétés mécaniques en traction des mélanges, nous avons représenté sur les figures 5, 6 et 7, respectivement, la variation du module élastique, de la résistance maximale à la traction et de l'allongement à la rupture en fonction du pourcentage massique de charge.

Sur la figure 5, on remarque que la valeur du module augmente progressivement avec le taux de GO présent dans le mélange jusqu'à une teneur de 30% en masse. Ceci est une indication quant à l'aptitude des particules de GO de conférer une plus grande rigidité au copolymère CEP de la matrice ; en effet, l'introduction de la charge GO, qui présente un module plus élevé, dans la matrice polyoléfine va procurer au matériau composite une plus grande résistance à la déformation par rapport au composant CEP seul. Cependant, pour une teneur de 40% en masse de GO, la valeur du module accuse une baisse. Un comportement similaire a été observé par López *et al.* 2012 pour des composites à base de polypropylène et de fibres naturelles ; il a été attribué à la formation d'agrégats de charge lignocellulosiques lorsque le pourcentage massique des fibres dépasse un seuil critique.

D'autre part, la résistance maximale à la traction décroit avec le taux de charge dans les mélanges (figure 6). En effet, celle-ci passe de 29 MPa pour le CEP seul à 17 MPa pour le mélange CEP/40% GO. Ceci pourrait être lié à la moindre dispersion des particules de GO dans la matrice à travers les interactions charge-charge qui entravent le transfert efficace des contraintes depuis la matrice vers la charge. Cet effet devient plus marquant lorsque le taux de charge dans le matériau augmente. Ces résultats sont en accord avec des travaux antérieurs [Ahmad *et al.* 2006].

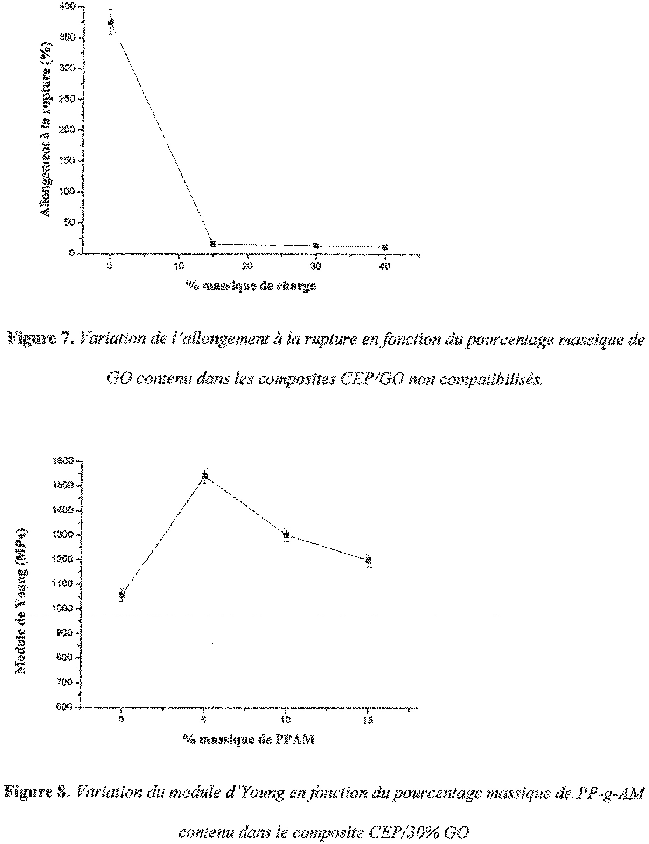

Sur la figure 7, le composant matrice vierge, étant le plus ductile, présente l'allongement à la rupture le plus élevé. L'ajout de GO provoque une réduction notable de la ductilité et confère au matériau un caractère indéniablement fragile. Ainsi, la coalescence des particules de la charge dans le système génère des amas de GO de tailles plus ou moins importances, qui se comportent comme des concentrateurs de contrainte. Il en résulte des phénomènes de décohésion et de cavitation au niveau des jonctions de particules lors de la propagation de la striction. Ceci va proférer une fragilisation de la matrice qui est traduite par l'abaissement remarquable de l'allongement à la rupture.

Afin d'étudier l'effet du taux de PP-g-AM sur les propriétés mécaniques des composites, nous avons tracé sur les figures 8, 9 et 10 respectivement, la variation du module de Young, de la résistance à la traction et de l'allongement à la rupture en fonction du taux de PPAM contenu dans le mélange CEP/GO élaboré avec 30% de GO.

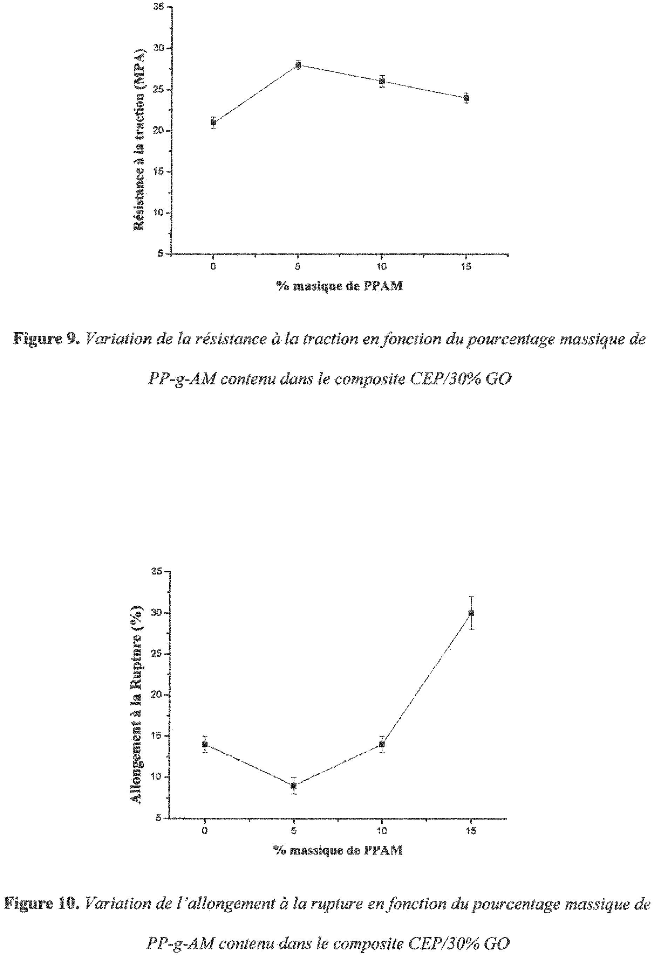

Avec l'ajout de 5% en masse de PP-g-AM au mélange CEP/30% GO, on observe une augmentation significative du module de Young (figure 8) ainsi que de la résistance à la traction (figure 9), par rapport au mélange homologue exempt de PP-g-AM. Ceci est associé à l'amélioration de l'adhésion à l'interface entre la matrice polymère et les particules GO dispersées. Ainsi, la présence de l'agent compatibilisant dans le système composite favorise simultanément aussi bien la réduction de la taille des agrégats de GO que la dispersion des particules GO dans la matrice. Ainsi, une structure plus cohésive de l'ensemble, qui rigidifie le composite, serait obtenue.

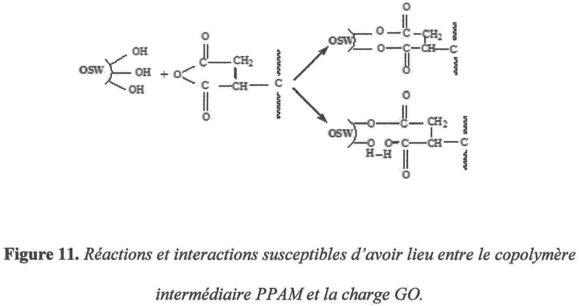

Le PP-g-AM apte de se lier chimiquement à la surface des particules GO, au travers de liaisons covalentes, grâce à la réaction d'estérification pouvant avoir lieu, en milieu fondu, entre les fonctions anhydrides du copolymère et hydroxyles de la charge lignocellulosique ; aussi, des interactions physiques fortes types liaisons hydrogènes peuvent s'établir entre les carboxyles de l'anhydride et les fonctions hydroxyles de la charge (figure 11) [Qui *et al.* 2004, Arrakhiz *et al.* 2012]. De plus, comme les chaînes de PP du copolymère compatibilisant (PP-g-AM) sont miscibles avec les séquences propylènes du copolymère matrice (CEP), elles vont ainsi interagir entres-elles en établissant un réseau assez dense de noeuds d'enchevêtrements. Subséquemment, grâce à ce pontage généré physico-chimiquement, l'adhésion à l'interface des deux phases se trouve fortement améliorée et les contraintes appliquées au composite ainsi compatibilisé, se transmettent aisément aux particules de GO. Ces dernières participent, de la sorte, à la consommation de l'énergie nécessaire à la déformation du matériau, ce qui explique les plus grandes résistances aussi bien à la déformation qu'à la traction enregistrées pour la formulation CEP65%/GO30%/PPAM5% (figures 8 et 9). Ces résultats corroborent parfaitement ceux de Bendahou *et al.* 2008 qui ont travaillé sur des composites à base polypropylène et de fibres de palmier dattier, compatibilisés avec 5% en masse de PPAM.

Cependant, le module et la résistance à la traction du mélange CEP/30% GO diminuent en présence de 10% PP-g-AM, et davantage plus avec 15% de PPAM (figures 8 et 9).

Ce résultat est attribué à l'excès de copolymère PP-g-AM présent dans le milieu ; en effet, une fois que la concentration du compatibiliasant arrive à saturation à l'interface des composants CEP/GO, le surplus du copolymère PP-g-AM, étant parfaitement soluble, se dilue dans la matrice CEP. Comme nous l'avons mentionné auparavant cette quantité résiduelle induit une plastifucation de la matrice et par voie de conséquence les résistances de celle-ci à la déformation et à la traction accusent une baisse très sensible.

La concentration préférentielle de l'intermédiaire PP-g-AM à l'interface favorise le glissement des chaînes à ce niveau. La consommation de l'énergie nécessaire à la déformation va être beaucoup plus supportée par le composant matrice que par la charge GO. La dissipation de l'énergie aura donc lieu au niveau de matrice CEP qui présente d'ores et déjà une moindre résistance. Ainsi le module et la contrainte maximale diminuent. Eu égard à la déformabilité importante ainsi acquise par les chaines de la matrice, l'allongement du matériau composite augmente considérablement (figure 10). Une teneur critique de compatibilisant, au-delà de laquelle on assiste à une diminution des propriétés mécaniques, peut être clairement observée entre 5 et 10% en poids. Cette quantité de PPAM est probablement suffisante pour enrober les particules de GO, favorisant ainsi l'interaction charge-matrice. L'excès de PPAM agit comme un plastifiant pour le système et diminue les propriétés viscoélastiques comme cela a été observé lors de l'étude rhéologique.

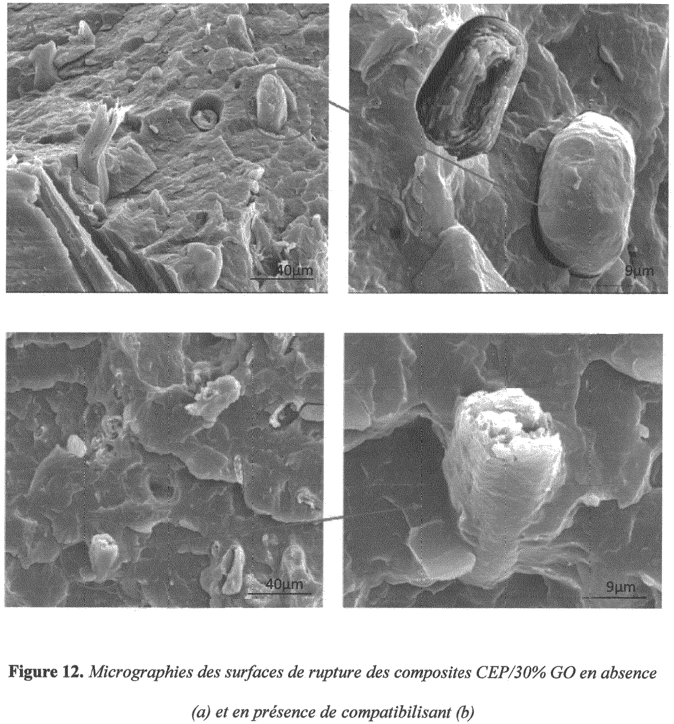

L'observation des échantillons est réalisée sur des surfaces de rupture d'éprouvettes après cryofracture (conditionnement dans l'azote liquide). Une métallisation à l'or est ensuite réalisée pour rendre le matériau plus conducteur. Les fractographies des composites contenant 30% de GO, avec et sans compatibilisant sont représentés sur la figure 12. Sur les faciès de rupture des composites (CEP/30% GO) non compatibilisés (figure 12 A), deux phases paraissent bien distinctes l'une de l'autre, preuve de leur immiscibilité. Les particules de la charge GO sont réparties dans la matrice d'une façon assez uniforme et un certain nombre d'entre-elles ont été arrachées lors de la cassure laissant à la place des cavités vides. On assiste alors à un déchaussement ou phénomène de « pull out » suite au bris de l'échantillon. Les particules restantes ne paraissent pas bien maintenues dans la structure ; de plus, on observe l'existence de vides à l'interface matrice/charge et l'adhésion est considérée, dans ce cas, comme étant médiocre. Ces résultats suggèrent que les interactions entre les deux composants sont très faibles ; ainsi, la densité des forces électrostatiques susceptibles de se générer à la surface des particules dispersées, à travers la différence de polarité et du caractère antagoniste entre le CEP (hydrophobe) et le GO (hydrophile), est presque insignifiante.

En comparant les résultats obtenus au MEB pour les composites CEP/30% GO non compatibilisés par rapport à leurs homologues compatibilisés avec 5% de PP-g-AM (figure 12 B), on remarque l'absence de cavités correspondant à l'arrachement des particules ; aussi, il n'y pas d'espaces vides localisés à la périphérie des particules. Au contraire, celles-ci apparaissent bien ancrées dans la structure et on parvient à améliorer substantiellement l'adhésion entre les deux composants du mélange. Ceci, est une indication quant à la meilleure qualité interfaciale créée par la présence de l'agent de couplage, qui en se concentrant aux limites des phases promeut l'accrochage du polymère CEP à la charge GO tout en générant à ce niveau un réseau assez dense de forces cohésives responsables de l'affermissement du système.

En outre, on peut clairement voir que la rupture a eu lieu au niveau des particules GO, ce qui signifie que les contraintes sont aussi bien supportées par la matrice que par la charge dans le composite ainsi compatibilisé. Ces observations corroborent les résultats obtenus lors de l'étude mécanique, à savoir, que les composites compatibilisés avec 5% de PPAM possèdent une résistance à la traction plus élevée que leurs homologues non comptabilisés.

**Revendications**

1. Procédé innovant permettant la fabrication d'un composite a base de farine de noyau d'olive et de matrice thermoplastique et thermodurcissable à usage industriel.

2. Procédé selon la revendication 1. Les composite a matrice thermodurcissable sont : les résines polystère insaturé, les résine époxydes et tout autre résines.

3. Procédé selon la revendication 1 ou 2 ; les composites à matrice thermoplastique sont ; les PC, PA, PS, PE, PVC,PP et tout autres polymère de plastique .

4. Procédé selon les revendications 1, 2 ou 3 l'innovation d'élaboration de ce composite à montrer la viabilité de l'utilisation de la farine de noyaux d'olive comme charge renforçant pour des matrices polymère et jusqu'un taux de 60% en poids, sans altération notable des propriétés du matériaux.

5. Procédé selon les revendications 1,2,3 et 4 le module de traction augmente régulièrement avec le teneur en charges.

6. Procédé selon les revendications 1,2,3 ,4 et 5 les résistance des composites è base de farine des noyaux d'olive est maintenue la même que les polymères de plastique.

7. Procédé selon les revendications 1,2,3,4,5 et 6 les composites à base de farine de noyaux d'olive et le polymère de plastique montrent une meilleur résistance vis-à-vis de l'eau.

8. Procédé selon les revendications 1,2,3, 4,5,6 et 7 les composite de farine de noyaux d'olive et polymère de plastique ont montrer une moindre sensibilité à l'eau avec une évolution dans le module et la résistance après l'absorption d'eau.

9. Procédé selon les revendications 1,2,3, 4,5,6,7 et 8 la fabrication d'un composite à matrices thermodurcissable et thermoplastique avec un charge de farine de noyaux d'olive jusqu'un taux de 60% en poids nécessite l'existence d'un agent de couplage tels que le MAPP ou/et tout autre agent de couplage qui représente 5% du volume de la farine de noyaux d'olive utilisé comme charge.

**Figure1.** *Particules de charge grignon d'olive observées au MEB*

**Figure 2.** *Courbes thermogravimétrique et de vitesse de la perte en masse du Grignon d'olives à 10°C. min¹, sous atmosphère inerte.*

a

B

**Figure 3.** *Variation de la viscosité dynamique complexe (η\*) en fonction de la fréquence de la matrice CEP vierge, des mélanges contentant différents taux de charge GO (a) et des mélanges [CEP/30% GO] élaborés aux différents taux de PP-g-AM (b), à 180°C.*

A

B

**Figure 4.** *Variation du module de conservation (G') en fonction de la fréquence de la matrice CEP vierge, des mélanges contentant différents taux de GO (a) et des mélanges [CEP/30%GO] élaborés aux différents taux de PPAM (b) à 180°C*

**Figure 5.** *Variation du module d'élasticité en fonction du pourcentage massique de GO contenu dans les composites CEP/GO non compatibilisés.*

**Figure 6.** *Variation de la résistance maximale à la traction en fonction du pourcentage massique de GO contenu dans les composites CEP/GO non compatibilisés.*

**Figure 7.** *Variation de l'allongement à la rupture en fonction du pourcentage massique de GO contenu dans les composites CEP/GO non compatibilisés.*

**Figure 8.** *Variation du module d'Young en fonction du pourcentage massique de PP-g-AM contenu dans le composite CEP/30% GO*

**Figure 9.** *Variation de la résistance à la traction en fonction du pourcentage massique de*

*PP-g-AM contenu dans le composite CEP/30% GO*

**Figure 10.** *Variation de l'allongement à la rupture en fonction du pourcentage massique de*

*PP-g-AM contenu dans le composite CEP/30% GO*

**Figure 11.** *Réactions et interactions susceptibles d'avoir lieu entre le copolymère intermédiaire PPAM et la charge GO.*

**Figure 12.** *Micrographies des surfaces de rupture des composites CEP/30% GO en absence (a) et en présence de compatibilisant (b)*

Europäisches
Patentamt

European
Patent Office

Office européen
des brevets

# RAPPORT DE RECHERCHE EUROPEENNE

Numéro de la demande

EP 17 00 0996

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2016/071932 A1 (SELEX ES SPA [IT]) 12 mai 2016 (2016-05-12) * le document en entier * * en particulier : abrégé ; page 5, ligne 1 - page 8, ligne 5 ; page 9, ligne 14 - page 11, ligne 2 ; revendications 1-17 ; figures 1-7 ; exemples * ----- | 1-9 | INV. C08L97/00 |
| X | WO 02/14432 A1 (REHAU SA [FR]; PIAIA EGON [FR]; JAUBERT ARNAUD [FR]) 21 février 2002 (2002-02-21) * le document en entier * * en particulier : abrégé ; page 2, lignes 8-36 ; page 3, lignes 25-37 ; revendications 1-11 ; exemples * ----- | 1-9 | |
| A | WO 2014/027054 A2 (BERNARD DIDIER [BE]) 20 février 2014 (2014-02-20) * le document en entier * ----- | 1-9 | |
| | | | **DOMAINES TECHNIQUES RECHERCHES (IPC)** |
| | | | C08L |

Le présent rapport a été établi pour toutes les revendications

| Lieu de la recherche | Date d'achèvement de la recherche | Examinateur |
|---|---|---|
| Munich | 5 janvier 2018 | Ferreira, Roger |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 ..............................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 17 00 0996

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-01-2018

| Document brevet cité au rapport de recherche | | Date de publication | Membre(s) de la famille de brevet(s) | | Date de publication |
|---|---|---|---|---|---|
| WO 2016071932 | A1 | 12-05-2016 | EP | 3215578 A1 | 13-09-2017 |
| | | | US | 2017324156 A1 | 09-11-2017 |
| | | | WO | 2016071932 A1 | 12-05-2016 |
| WO 0214432 | A1 | 21-02-2002 | AU | 8599301 A | 25-02-2002 |
| | | | EA | 200300267 A1 | 28-08-2003 |
| | | | EP | 1313807 A1 | 28-05-2003 |
| | | | FR | 2813082 A1 | 22-02-2002 |
| | | | WO | 0214432 A1 | 21-02-2002 |
| WO 2014027054 | A2 | 20-02-2014 | AUCUN | | |

EPO FORM P0460

Pour tout renseignement concernant cette annexe : voir Journal Officiel de l'Office européen des brevets, No.12/82